# EUROPEAN PATENT SPECIFICATION

(11) **EP 1 647 725 B1**
(45) Date of publication and mention of the grant of the patent: **08.02.2012**
(21) Application number: 05021666.2
(22) Date of filing: 04.10.2005
(51) Int. Cl.: F16C 11/06, F16C 25/02, B61F 5/16, B61D 3/10, B61F 3/12

(54) **Wear adjustable spherical thrust bearing arrangement for bi-directional axial loads for coupling a bogie to a passenger car**
Zum Ausgleich von Abnutzung justierbares Kalottengelenk für Axialbelastungen in zwei Richtungen zum Verbinden eines Drehgestells mit einem Wagon
Dispositif d'articulation sphérique à crapaudine pour des charges axiales bi-directionelles pour la liaison d'un bogie avec le wagon et ajustable afin de compenser l'usure

(30) Priority: 11.10.2004 GB 0422564
(43) Date of publication of application: 19.04.2006
(73) Proprietor: MINEBEA CO.,LTD., Kitasaku-gun, 389-0293 Nagano (JP)
(72) Inventor: Hülsen, Tobias, NMB-Minebea UK Ltd, Lincoln LN6 3RA (GB)
(74) Representative: Hoarton, Lloyd Douglas Charles

(56) References cited:
- WO-A-03/029065
- DE-A1- 10 138 836
- DE-A1- 10 139 970
- DE-C- 119 922
- DE-U1- 29 603 375
- GB-A- 1 188 599
- US-A- 2 828 984

## Description

The present invention relates to a thrust bearing arrangement for accommodating a bi-directional axial thrust and, in particular, a thrust bearing arrangement of the type generally used to couple two elements subject to relative rotation and yawing about a common axis, for example coupling a bogie to a passenger carriage.

The axial thrust-bearing requirements of coupling bearings between the passenger carriages of trains, trams, buses and coaches are dependent upon the particular type of passenger carriages being coupled together in a given case. Thus, for a large number of passenger carriage types, the coupling bearing is only subjected to an axial thrust directed vertically downwardly and, as such, the coupling bearing between the carriages need only be able to accommodate a thrust in a vertically downward direction. Such coupling bearings need only have a single bearing surface capable of bearing a vertically downward axial thrust.

However, in the case of certain types of carriages well known in the art, the associated coupling bearing is subjected to a bi-directional axial thrust, in particular a primary axial thrust in a vertical downward direction and a secondary axial thrust in a vertical upward direction, so that it is necessary to provide a coupling bearing which can accommodate both an upward axial thrust and a downward axial thrust.

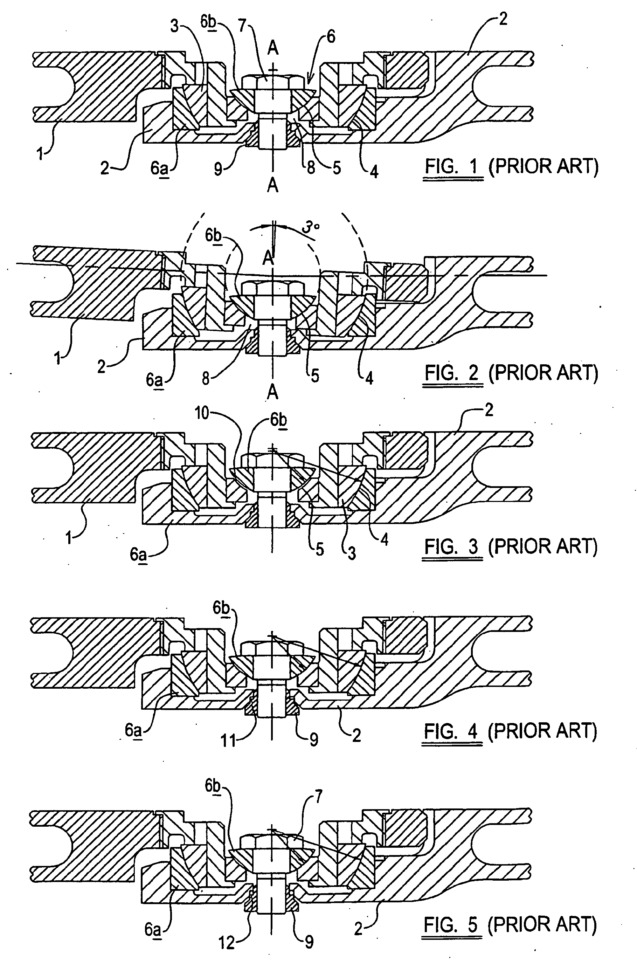

Figure 1 of the accompanying drawings shows a bi-directional axial thrust bearing arrangement known in the prior art for coupling a bogie to a passenger carriage (not shown). The prior art arrangement comprises a generally toroidal bearing member 3, rigidly connected to a first connecting arm 1 from the bogie, having a first spherical bearing surface 4 and a second spherical bearing surface 5. The spherical bearing member 3 is received within a bearing housing 6 which comprises a first housing portion 6a rigidly connected to a second connecting arm 2 from the carriage and having a spherical bearing surface which is complementary to, and engages with, the bearing surface 4 of the spherical bearing member 3. The bearing housing 6 also comprises a "floating" housing portion 6b having a spherical bearing surface which is complementary to, and engages with, the spherical bearing surface 5 of the spherical bearing member 3. The housing portion 6b is secured to the connecting arm 2 by means of bolt 7 projecting down through a clearance hole 8 in the spherical bearing member 3 and housing portion 6a, and engaging with a complementary nut 9. Thus, the bolt 7 and nut 9 act to secure both of the housing portions 6a and 6b in engagement with the bearing surfaces 4 and 5 of the spherical bearing member 3.

It will be appreciated that, in the prior art arrangement shown in Figure 1, the coupling bearing between the connecting arms 1 and 2 is configured to withstand an axial thrust, occurring as a result of relative movement of the connecting arms 1 and 2, in both a downward axial direction (in which case housing portion 6a and thrust bearing member 3 bear the axial thrust) as well as an upward axial direction (in which case spherical bearing member 3 and housing portion 6b bear the axial thrust). It will further be appreciated that relative rotational movement about the central axis A (Figure 1) can be accommodated by the coupling bearing. In addition, and with reference to Figure 2, it will be appreciated that the coupling bearing can also accommodate a relative yawing motion of the two connecting arms about an axis B passing through the centre of curvature of the bearing surfaces 4 and 5.

It has been found that during operation of the prior art arrangement shown in Figure 1 over a given period of time, the bolt 7 and nut 9 tend to become loose, thereby allowing relative axial acceleration between the connecting arms 1 and 2 and subsequent undesirable stress on the securing bolt 7 and nut 9 which, unless remedied, may result in deformation or even shearing of the securing bolt 7, with consequent coupling bearing failure. In order to overcome the problem of potential coupling bearing failure due to the securing bolt becoming loose, it has been normal practice to tighten the securing bolt 7 and nut 9 at regular intervals, thereby re-engaging housing portions 6a and 6b with the spherical bearing member 3 and thus eliminating the problem of relative axial acceleration of the connecting arms 1 and 2. However, it has been found that, although relative axial acceleration of the connecting arms 1 and 2 is prevented by tightening the securing bolt 7 and nut 9, the securing bolt 7 and nut 9 are nevertheless still prone to deformation and possible shearing, with consequent coupling bearing failure; Thus, simply tightening the securing bolt 7 and nut 9 in the prior art arrangement shown in Figure 1 does not prevent unacceptable stresses being imposed on the securing bolt 7 and nut 9.

It is an object of the present invention to seek to provide an improved thrust bearing arrangement.

It has now been found, in accordance with the present invention, that the above noted deficiencies in the prior art arrangement of Figure 1 of the accompanying drawings can be attributed to the specific relationship between the geometry of the bearing arrangement in conjunction with the selected wear characteristics of certain components within the arrangement.

Thus, Figure 3 of the accompanying drawings shows the prior art arrangement of Figure 1 of the accompanying drawings after a given period of operation, during which time wear has occurred to the spherical bearing surface of the housing portion 6a. Consequently, the spherical bearing member 3 has dropped, to re-engage with the spherical bearing surface of the housing portion 6a, thus tending to create a gap 10 between the housing portion 6b and the bearing surface 5 of the spherical bearing member 3. It is noted that, in the momentary (schematic) position shown in Figure 3 of the accompanying drawings, wherein the housing portion is shown in its original position prior to wear, the centre of curvature of the spherical bearing surface of the housing portion 6b is offset with respect to the centre of curvature of the spherical bearing surface of the housing portion 6a, which has now effectively "dropped" downward due to wear by the spherical bearing member 3.

Figure 4 shows the situation after the housing portion 6b has also dropped to fill the gap 10 which is shown in Figure 3. In such a position, a corresponding gap 11 develops between the nut 9 and the connecting arm 2. However, because the housing portion 6b has effectively dropped by an equal amount to the spherical bearing member 3, which has in turn dropped by an equal amount to the "drop" in the spherical bearing surface of the housing portion 6a, the centres of curvature of the spherical bearing surfaces of the housing portions 6a and 6b are once again coincidental with one another.

Thus, successive wearing due to a downward axial thrust acts to maintain the centres of curvature of the spherical bearing surfaces of the housing portion 6a and 6b coincidentally with one another.

However, over the same operating period, axial thrust in an upward direction will cause wear to the bearing surface 5 (due to the relative wear resistance of the spherical bearing member 3 and housing portion 6b) and, as shown in Figure 5, such wear to the bearing surface 5 will result in the housing portion 6b dropping a further distance to once again re-engage with the bearing surface 5, with the result that an increased gap 12 is formed between the nut 9 and the connecting arm 2. Critically, because the wear to the bearing surface 5 results in a drop of the housing portion 6b, but no associated drop of the spherical bearing member 3, the centres of curvature of the spherical bearing surfaces of the housing portions 6a and 6b subsequently become axially displaced with respect to one another, so that in the prior art arrangement of Figures 1 to 5, it can be seen that wear caused by an axial upwardly directed thrust actually acts to offset the centres of curvature of the spherical bearing surface of the bearing housing 6, with the result that the spherical bearing surfaces are no longer concentric.

Referring again to Figure 5, it will be appreciated that, due to the formation of gap 12, the connecting arms 1 and 2 are free to accelerate relative to one another so that an impact load is generated upon consequent impact of either the connecting arm 2 with the nut 9 or, alternatively the bearing surface 5 with the housing portion 6a.

In addition, and with reference to Figure 5, it can now be appreciated that wear occurring within the coupling bearing arrangement of Figure 1 of the accompanying drawings can result in a fundamental change in the bearing geometry of the arrangement, which alters the performance characteristics of the bearing. Thus, because the spherical bearing surfaces of the housing portion 6a and housing portion 6b are no longer concentric with one another, relative rotation or yawing motion of the connecting arms 1 and 2 about axes A and B respectively will now necessarily result in upward axial force being imposed on the housing portion 6b, due to the spherical bearing member acting as a spherical "wedge". Thus, if the bearing is left loose, relative rotation or yawing of the connecting arms 1 and 2 about axes A and B will itself produce relative axial movement of the connecting arms and a consequent impact loading on the nut 9 and housing portions 6a. Furthermore, if the securing bolt 7 and nut 9 are tightened to ensure engagement of housing portions 6a and 6b with spherical bearing surfaces 4 and 5 of the spherical bearing member 3 then, although relative acceleration of the connecting arms 1 and 2 may be avoided, the modified geometry of the bearing arrangement will now result in an axial force being generated along the central axis A, thereby placing stress upon the securing bolt 7 and nut 9 which may lead to the aforementioned deformation or shearing of the securing bolt 7 and consequent coupling bearing failure.

Document WO 03/029065 discloses a thrust bearing arrangement for withstanding a bi-directional axial thrust according to the preamble of claim 1, wherein an inner ball is mounted to a central post of an outer housing.

According to the present invention there is provided a thrust bearing arrangement for withstanding a bi-directional axial thrust, the arrangement comprising a bearing member having concentric spherical inner and outer bearing surfaces; a thrust-bearing outer housing having a base and a central post upstanding from the base, the central post being integrally formed with the outer housing, the thrust-bearing outer housing further comprising a spherical outer counter surface; and a thrust-bearing inner housing mounted on the central post; characterised in that: the inner housing receives a liner having a spherical inner counter surface being concentric with the outer counter surface; the arrangement is further provided with adjustment means for adjusting the relative separation of the counter surfaces to maintain both of the inner and outer counter surfaces in contiguous engagement with the respective inner and outer bearing surfaces; and the wear resistance of the inner and outer bearing surfaces is selected so as to be greater than the wear resistance of the inner and outer counter surfaces respectively such that, in use of the arrangement, wear between the bearing surfaces and counter surfaces occurs predominantly to the respective counter surfaces.

Preferably, the outer counter surface is defined by the outer housing.

Conveniently, the outer counter surface is defined by a bearing liner attached to the outer housing.

Preferably, the adjustment means is in the form of a first screw threaded member associated with the inner counter surface and a second screw threaded member associated with the outer counter surface, the first screw threaded member being complementary, and engaging with, a screw-threaded bore of the second screw threaded member.

Conveniently, the first screw-threaded member is in the form of an adjustment screw projecting at one end through a complementary screw-threaded bore in the second screw-threaded member, the projecting end of the adjustment screw being operably connected to the inner housing liner such that rotation of the adjustment screw advances the inner counter surface of said liner towards the outer counter surface.

Advantageously, the first screw-threaded member is in the form of an adjustment screw projecting through a clearance hole in each of the bearing housings and thrust bearing member, and the second screw-threaded member is in the form of an adjustment nut engaging with the projecting end of the adjustment screw opposite the screw head.

Preferably, the adjustment arrangement comprises a bias means to resiliently bias the inner and outer counter surfaces towards one another so as to ensure said maintenance of the inner and outer counter surfaces in contiguous engagement with the respective bearing surfaces.

Conveniently, there is further provided a number of threaded holes in the central post and a corresponding number of bores through the inner housing each to align with a corresponding threaded hole, and a locking screw is fastened in each hole and bore to attach the inner housing to the central post.

Advantageously, the or each locking screw is countersunk into the inner housing.

Preferably, at least one fixture is provided on the outer housing to mount the outer housing to a first element and wherein at least one fixture is provided on the spherical bearing member to mount the spherical bearing member to a second element.

Conveniently, the first element is associated with a bogie of a vehicle and the second element is associated with a carriage of the vehicle.
Figure 1 shows a cross sectional view of a thrust bearing arrangement according to the prior art in an operative position coupling together two loads.
Figure 2 shows a cross sectional view of the prior art arrangement of Figure 1, illustrating how the arrangement accommodates a yawing motion between the two loads.
Figure 3 shows a cross sectional view of the prior art arrangement of Figure 1 which schematically illustrates the initial effect of bearing surface wear due to a downwardly directed axial thrust.

Figure 4 shows a cross sectional view of the partly worn bearing arrangement of Figure 3, illustrating the progressive effects of bearing surface wear due to a downwardly directed axial thrust.

Figure 5 shows a cross sectional view of the partly worn arrangement of Figure 4, but further illustrating the effect of an additional bearing surface wear due to an upward axial thrust.

Figure 6 shows a cross sectional view of a thrust bearing arrangement according to the present invention prior to bearing surface wear.

Figure 7 shows the thrust bearing arrangement of Figure 6 but subject to bearing surface wear due to both an upward and downward directed axial thrust.

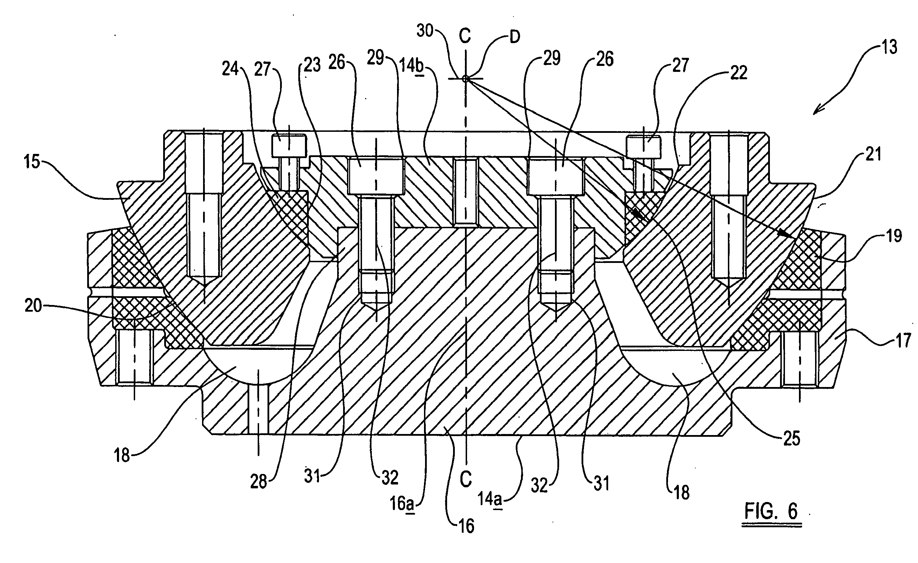

Referring now to Figure 6, a thrust bearing arrangement 13 is provided according to the present invention comprising, generally, a bearing housing arrangement 14 configured to be mounted to a first given element and a bearing member 15 configured to be mounted to a second given element so as to couple together the two elements (for example a carriage and a bogie) in a similar manner to the prior art arrangement of Figures 1 to 5.

The bearing housing arrangement 14 comprises an outer housing 14a incorporating a central base portion 16 and peripheral ring portion 17 which together define an annular recess 18. A central post 16a extending upwardly from the base portion 16 to approximately the same level as the upper edge of ring portion 17. A bearing liner 19, preferably in the form of a conventional preformed, thermoplastic lubricating liner, is mounted to the rim portion 17 of the outer housing portion 14a and is configured to present a continuous, annular counter surface 20 which is spherical, in the sense that it forms at least a portion of the surface of an imaginary sphere.

Bearing member 15 is in the form of an annular bearing member having an outer bearing surface 21 and an inner bearing surface 22 which are both spherical, in the sense that they define at least a portion of the surface of an imaginary sphere, and which are also concentric with one another, in the sense that the centre of curvature of the associated imaginary spheres, indicated at 30 in Figure 6, are coincidental with one another. The annular bearing member 15 fits over the central hub portion 16 of the outer housing 14a to contiguously engage with the counter surface 20 of the liner 19. Thus, the counter surface 20, defined by the liner 19, represents an outer counter surface associated with the outer housing 14a.

The bearing housing arrangement 14 is also provided with an inner housing 14b in the general shape of a truncated upturned dome having an annular recess 23 configured to receive a further annular bearing liner 24 having a continuous counter surface 25 which is spherical, in the sense that it forms at least a portion of the surface of an imaginary sphere.

The inner housing 14b has a cylindrical recess 28 at its lower end which receives the top section of the central post 16a (see Figure 6). Thus the inner housing 14b is mounted on the central post 16a.

In the example shown in Figure 6, two bores 29 are provided in the inner housing 14b which align with corresponding threaded holes 31 provided in the post 16a. Locking screws 32 pass through the bores 29 in the inner housing 14b and are screwed into the threaded holes 31 in the central post 16a.

Preferably, the locking screws 32 are countersunk into the body of the inner housing 14b so that the upper surface of the inner housing 14b has a flush profile.

Adjustment screws 27 (of which two are shown in Figure 6) are mounted within screw threaded holes in the inner housing 14b opening on to the recess 23 such that the adjustment screws 27 may be screwed downwards to abut against the liner 24 and ensure a positive contiguous engagement of the counter surface of liner 24 with the inner bearing surface 22 of the bearing member 15. Thus, it will be appreciated that the counter surface defined by the liner 24 represents an inner bearing counter surface associated with the inner housing 14b. It is noted that the adjustment screws 27 may be progressively screwed downward to move the liner 24 towards the liner 19 and, as such, adjustment screws 27 and inner housing 14b effectively represent first and second complementary screw threaded members, associated respectively with the inner and outer counter surfaces, 20 and 25, which together form an adjustment means for adjusting the relative separation of the inner and outer counter surfaces (i.e. counter surfaces 25 and 20) to maintain both the inner and outer counter surfaces in contiguous engagement with the respective inner and outer bearing surfaces 22 and 21 of the bearing member 15.

Wear characteristics of the bearing member 15 are selected so that the wear resistance of the bearing surfaces 21 and 22 are greater than the respective wear resistances of counter surfaces 20 and 25. Wear resistances of the bearing surfaces 21 and 22 and counter surfaces 20 and 25 are selected so that wear occurring predominantly to counter surfaces 20 and 25 occurs at an identical rate; in particular, it is envisaged that, on the one hand, the wear resistance of the bearing surfaces 21 and 22 is selected to be identical and, on the other hand, the wear resistance of the counter surfaces 20 and 25 is also selected to be identical so that the two sets of bearing/counter surfaces are identical.

It will be appreciated, with reference to Figure 6, that the configuration of the thrust bearing arrangement is such that it can accommodate both a relative rotational motion of the bearing housing 14 and bearing member 15 about the central axis C, as well as a relative pivoting or yawing motion of the bearing housing 14 and bearing member 15 about the perpendicular axis D (running through the centre of curvature of bearing surfaces 20, 21, 22 and 25).

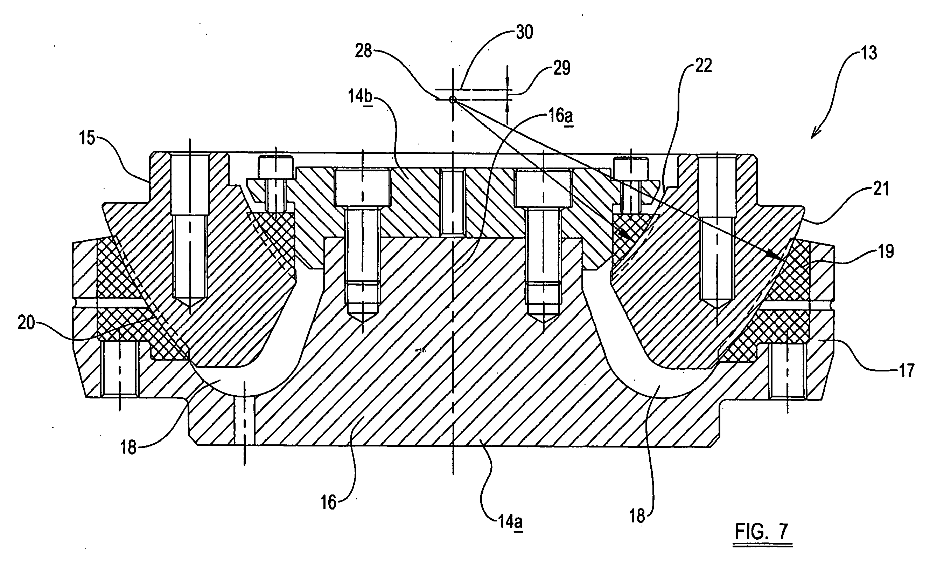

Referring now to Figure 7, the bearing arrangement is shown after operation over a given period of time, during which the arrangement has been subjected to an axial thrust both in a downward direction, tending to force the bearing member 15 against the liner 19, and an upward direction, tending to force the bearing member 15 against the liner 24.

It can be seen, from Figure 7, that, due to the relative wear resistances of bearing surface 21 and counter surface 20, subjecting the bearing arrangement to a downward axial thrust results in a progressive wearing of the liner 19 (as indicated by the dotted lines in Figure 7). In addition, it can be seen that, due to the relative wear resistances of bearing surface 22 and counter surface 25, subjecting the bearing arrangement to an upward axial thrust results in a progressive wearing of the liner 24 (indicated by the dotted lines in Figure 7). Specifically, it is to be noted that any wear between the bearing surfaces 21 and 22 and the respective inner and outer counter surfaces (20 and 25) occurs to the respective counter surface and not to the bearing surfaces 21 and 22 of the bearing member 15. Thus, it will be appreciated that the bearing member 15 will, essentially, retain its specific shape and, in particular, the spherical bearing surfaces 21 and 22 will, crucially, remain concentric with one another.

Therefore, when the counter surface 25 of the liner 24 is re-engaged with the bearing surface 22 of the bearing member 15, each of the bearing surfaces 21, 22 and counter surfaces 20, 25 will, necessarily, still be concentric with one another, albeit about a new centre of curvature 28, axially offset by a distance 29 from the original centre of curvature 30 corresponding to the axial "drop" of the spherical bearing member 15 due to wear of the liner 19.

Thus, the selected wear resistances of the bearing surfaces 21, 22 and counter surfaces 20, 25, in conjunction with the geometry of the bearing arrangement 13, ensure that the bearing arrangement 13 may still accommodate a relative rotation about the central axis C and relative yawing motion about the axis D (see Figure 6), without generation of an associated axial thrust, despite wear occurring at the counter surfaces, so that even where the bearing arrangement 13 is left "loose", relative axial movement of the bearing member 15 and bearing housing 14 due to rotational and/or yawing motion is eliminated. Consequently, it is possible to maintain the liner 19 and liner 24 in positive engagement with the bearing member 15, by means of adjustment screws 27, thereby eliminating relative axial acceleration of the bearing member 15 and bearing housing 14, whilst also preventing undesirable stress being imposed upon the securing bolt 26 in the case of relative rotation or yawing motion of the bearing member 15 and housing 14.

In an arrangement not embodying the present invention, the bearing housing may take any one of a number of possible forms. By way of an example not embodying the present invention, the bearing housing might take the form of a housing arrangement similar to housing 6 shown in the prior art arrangement of Figures 1 to 5. That is, the housing arrangement may comprise an outer housing which is similar to outer housing 14a, in conjunction with an inner housing which is a "floating" housing similar to housing portion 6b of the prior art arrangement, with the two housings being secured to one another by means of a bolt and nut similar to securing bolt 7 and nut 9 of the prior art arrangement of Figures 1 to 5.

Furthermore, it is envisaged that the inner and outer counter surfaces 25 and 20, defined respectively by the liners 24 and 19 in the particular embodiment of Figures 6 and 7, could take any one of a number of alternative forms, provided only that they present a spherical counter surface to contiguously engage with the spherical bearing surfaces of the bearing member 15. Thus, the outer counter surface may in fact be formed integrally with the outer housing, for example the housing may be formed so as to have a integral spherical counter surface, which could either define a "direct" (unlined) counter surface or which could subsequently be lined directly with a conventional bearing liner.

When used in this specification and claims, the terms "comprises" and "comprising" and variations thereof mean that the specified features, steps or integers are included. The terms are not to be interpreted to exclude the presence of other features, steps or components.

## Claims

1. A thrust bearing arrangement (13) for withstanding a bi-directional axial thrust, the arrangement (13) comprising:
a bearing member (15) having concentric spherical inner (22) and outer (21) bearing surfaces;
a thrust-bearing outer housing (14a) having a base (16) and a central post (16a) upstanding from the base (16), the central post (16a) being integrally formed with the outer housing, the thrust-bearing outer housing (14a) further comprising a spherical outer counter surface (20); and
a thrust-bearing inner housing (14b) mounted on the central post (16a);
**characterised in that**:
the inner housing (14b) receives a liner (24) having a spherical inner counter surface (25) being concentric with the outer counter surface (20);
the arrangement is further provided with adjustment means (14b, 16a, 27, 32) for adjusting the relative separation of the counter surfaces (25,20) to maintain both of the inner (25) and outer (20) counter surfaces in contiguous engagement with the respective inner (22) and outer (21) bearing surfaces; and
the wear resistance of the inner (22) and outer (21) bearing surfaces is selected so as to be greater than the wear resistance of the inner (25) and outer (20) counter surfaces respectively such that, in use of the arrangement (13), wear between the bearing surfaces (22,21) and counter surfaces (25,20) occurs predominantly to the respective counter surfaces (25,20).

2. A thrust bearing arrangement (13) according to claim 1, wherein the outer (20) counter surface is defined by the outer housing (14a).

3. A thrust bearing arrangement (13) according to claim 1, wherein the outer (20) counter surface is defined by a bearing liner (19) attached to the outer housing (14a).

4. A thrust bearing arrangement (13) according to any preceding claim, wherein the adjustment means is in the form of a first screw threaded member (27, 32) associated with the inner counter surface (25) and a second screw threaded member (14b, 16a) associated with the outer counter surface (20), the first screw threaded member (27, 32) being complementary, and engaging with, a screw-threaded bore (31) of the second screw threaded member (14b, 16a).

5. A thrust bearing arrangement (13) according to claim 4, wherein the first screw-threaded member is in the form of an adjustment screw (27) projecting at one end through a complementary screw-threaded bore in the second screw-threaded member (14b), the projecting end of the adjustment screw (27) being operably connected to the inner housing liner (24) such that rotation of the adjustment screw (27) advances the inner counter surface (25) of said liner (24) towards the outer counter surface (20).

6. A thrust bearing arrangement (13) according to claim 4, wherein the first screw-threaded member is in the form of an adjustment screw projecting through a clearance hole in each of the bearing housings (14a,14b) and thrust bearing member (15), and the second screw-threaded member is in the form of an adjustment nut engaging with the projecting end of the adjustment screw opposite the screw head.

7. A thrust bearing arrangement (13) according to any preceding claim, wherein the adjustment means comprises a bias means to resiliently bias the inner (25) and outer (20) counter surfaces towards one another so as to ensure said maintenance of the inner (25) and outer (20) counter surfaces in contiguous engagement with the respective bearing surfaces (21,22).

8. A thrust bearing arrangement (13) according to any preceding claim, wherein there is further provided a number of threaded holes (31) in the central post (16a) and a corresponding number of bores (29) through the inner housing (14b) each to align with a corresponding threaded hole (31), and a locking screw (32) is fastened in each hole (31) and bore (29) to attach the inner housing (14b) to the central post (16a).

9. A thrust bearing arrangement (13) according to claim 8, wherein the or each locking screw (32) is countersunk into the inner housing (14b).

10. A thrust bearing arrangement (13) according to any preceding claim, wherein at least one fixture is provided on the outer housing (14a) to mount the outer housing (14a) to a first element and wherein at least one fixture is provided on the spherical bearing member (15) to mount the spherical bearing member (15) to a second element.

11. A thrust bearing arrangement (13) according to claim 10, wherein the first element is associated with a bogie of a vehicle and the second element is associated with a carriage of the vehicle.

## Patentansprüche

1. Axiallageranordnung (13) zum Standhalten gegen einen bidirektionalen axialen Schub, wobei die Anordnung (13) umfasst:
ein Lagerelement (15) mit konzentrischen kugelförmigen inneren (22) und äußeren (21) Lagerflächen;
ein Axiallager-Außengehäuse (14a) mit einer Basis (16) und einem mittigen Stab (16a), der von der Basis (16) aufsteht, wobei der mittige Stab (16a) mit dem Außengehäuse einstückig ausgebildet ist und das Axiallager-Außengehäuse (14a) des Weiteren eine kugelförmige äußere Gegenfläche (20) umfasst; und
ein Axiallager-Innengehäuse (14b), das auf dem mittigen Stab (16a) angebracht ist;
**dadurch gekennzeichnet, dass**:
das Innengehäuse (14b) eine Auskleidung (24) mit einer kugelförmigen inneren Gegenfläche (25) aufnimmt, die mit der äußeren Gegenfläche (20) konzentrisch ist;
die Anordnung weiterhin mit einer Verstelleinrichtung (14b, 16a, 27, 32) zum Verstellen der relativen Trennung der Gegenflächen (25, 20) versehen ist, um sowohl die innere (25) als auch die äußere (20) Gegenfläche in zusammenhängendem Eingriff mit der jeweiligen inneren (22) und äußeren (21) Lagerfläche zu halten; und
die Verschleißfestigkeit der inneren (22) und äußeren (21) Lagerfläche so ausgewählt ist, dass sie größer als die Verschleißfestigkeit der inneren (25) bzw. äußeren (20) Gegenfläche ist, so dass beim Gebrauch der Anordnung (13) der Verschleiß zwischen den Lagerflächen (22, 21) und Gegenflächen (25, 20) vorrangig an den jeweiligen Gegenflächen (25, 20) auftritt.

2. Axiallageranordnung (13) nach Anspruch 1, wobei die äußere (20) Gegenfläche durch das Außengehäuse (14a) begrenzt ist.

3. Axiallageranordnung (13) nach Anspruch 1, wobei die äußere (20) Gegenfläche durch eine Lagerauskleidung (19), die am Außengehäuse (14a) befestigt ist, begrenzt ist.

4. Axiallageranordnung (13) nach irgendeinem vorhergehenden Anspruch, wobei die Verstelleinrichtung in Form eines ersten Schraubengewindeelements (27, 32) vorliegt, das der inneren Gegenfläche (25) zugeordnet ist, und eines zweiten Schraubengewindeelements (14b, 16a) vorliegt, das der äußeren Gegenfläche (20) zugeordnet ist, wobei das erste Schraubengewindeelement (27, 32) komplementär zu einer Schraubengewindebohrung (31) des zweiten Schraubengewindeelements (14b, 16a) ist und in diese eingreift.

5. Axiallageranordnung (13) nach Anspruch 4, wobei das erste Schraubengewindeelement in Form einer Verstellschraube (27) vorliegt, die an einem Ende durch eine komplementäre Schraubengewindebohrung im zweiten Schraubengewindeelement (14b) vorsteht, wobei das vorstehende Ende der Verstellschraube (27) funktionsfähig mit der Innengehäuseauskleidung (24) so verbunden ist, dass eine Drehung der Verstellschraube (27) die innere Gegenfläche (25) der Auskleigung (24) zur äußeren Gegenfläche (20) hin vorschiebt.

6. Axiallageranordnung (13) nach Anspruch 4, wobei das erste Schraubengewindeelement in Form einer Verstellschraube vorliegt, die durch ein Durchsteckloch in jedem der Lagergehäuse (14a, 14b) und dem Axiallagerelement (15) vorsteht, und das zweite Schraubengewindeelement in Form einer Verstellmutter vorliegt, die mit dem vorstehenden Ende der Verstellschraube gegenüber dem Schraubenkopf im Eingriff ist.

7. Axiallageranordnung (13) nach irgendeinem vorhergehenden Anspruch, wobei die Verstelleinrichtung eine Vorspanneinrichtung umfasst, um die innere (25) und äußere (20) Gegenfläche zueinander hin elastisch vorzuspannen, um die Aufrechterhaltung der inneren (25) und äußeren (20) Gegenflächen in zusammenhängendem Eingriff mit den jeweiligen Lagerflächen (21, 22) sicherzustellen.

8. Axiallageranordnung (13) nach irgendeinem vorhergehenden Anspruch, wobei weiterhin eine Anzahl Gewindelöcher (31) im mittigen Stab (16a) und eine entsprechende Anzahl Bohrungen (29) durch das Innengehäuse (14b) vorgesehen ist, so dass sie jeweils mit einem entsprechenden Gewindeloch (31) fluchten, und eine Arretierschraube (32) in jedem Loch (31) und jeder Bohrung (29) fixiert ist, um das Innengehäuse (14b) am mittigen Stab (16a) zu befestigen.

9. Axiallageranordnung (13) nach Anspruch 8, wobei die oder jede Arretierschraube (32) in das Innengehäuse (14b) versenkt ist.

10. Axiallageranordnung (13) nach irgendeinem vorhergehenden Anspruch, wobei zumindest eine Haltevorrichtung auf dem Außengehäuse (14a) vorgesehen ist, um das Außengehäuse (14a) an einem ersten Element anzubringen, und wobei zumindest eine Haltevorrichtung auf dem kugelförmigen Lagerelement (15) vorgesehen ist, um das kugelförmige Lagerelement (15) an einem zweiten Element anzubringen.

11. Axiallageranordnung (13) nach Anspruch 10, wobei das erste Element einem Drehgestell eines Fahrzeugs zugeordnet ist und das zweite Element einem Wagen des Fahrzeugs zugeordnet ist.

## Revendications

1. Un dispositif d'articulation (13) capable de supporter une poussée axiale bidirectionnelle, le dispositif (13) se composant de ce qui suit :
un membre porteur (15) ayant des surfaces porteuses intérieure (22) et extérieure (21) sphériques concentriques ;
un carter extérieur de butée (14a) ayant une base (16) et un montant central (16a) droit partant de la base (16), le montant central (16a) étant formé d'un seul bloc avec le carter extérieur, le carter extérieur de butée (14a) comprenant également une contre-surface extérieure sphérique (20) ; et
un carter intérieur de butée (14b) monté sur le montant central (16a)
**se caractérisant par** ce qui suit :
le carter intérieur (14b) reçoit un coussinet (24) ayant une contre-surface intérieure sphérique (25) concentrique avec la contre-surface extérieure (20) ;
le dispositif est également muni d'un système d'ajustement (14b, 16a, 27, 32) permettant d'ajuster la séparation relative des contre-surfaces (25, 20) afin de maintenir les contre-surfaces intérieure (25) et extérieure (20) en contact contigu avec les surfaces porteuses intérieure (22) et extérieure (21) respectives ; et
la résistance à l'usure des surfaces porteuses intérieure (22) et extérieure (21) est sélectionnée de façon à être supérieure à la résistance à l'usure des contre-surfaces intérieure (25) et extérieure (20) respectivement, de manière telle que, lors de l'utilisation du dispositif (13), l'usure entre les surfaces porteuses (22, 21) et les contre-surfaces (25, 20) aura lieu surtout sur les contre-surfaces respectives (25, 20).

2. Un dispositif d'articulation (13) selon la revendication 1, dans lequel la contre-surface extérieure (20) est définie par le carter extérieur (14a).

3. Un dispositif d'articulation (13) selon la revendication 1, dans lequel la contre-surface extérieure (20) est définie par un coussinet de palier (19) fixé au carter extérieur (14a).

4. Un dispositif d'articulation (13) selon n'importe laquelle des revendications précédentes, dans lequel le système d'ajustement se présente sous la forme d'un premier membre fileté (27, 32) associé à la contre-surface intérieure (25) et d'un deuxième membre fileté (14b, 16a) associé à la contre-surface extérieure (20), le premier membre fileté (27, 32) étant complémentaire de l'alésage fileté (31), avec lequel il s'engrène, du deuxième membre fileté (14b, 16a).

5. Un dispositif d'articulation (13) selon la revendication 4, dans lequel le premier membre fileté se présente sous la forme d'une vis de réglage (27) dépassant à une extrémité d'un alésage fileté complémentaire dans le deuxième membre fileté (14b), l'extrémité en saillie de la vis de réglage (27) étant opérationnellement raccordée au coussinet (24) du carter intérieur de manière telle que la rotation de la vis de réglage (27) fasse avancer la contre-surface intérieure (25) du coussinet (24) vers la contre-surface extérieure (20).

6. Un dispositif d'articulation (13) selon la revendication 4, dans lequel le premier membre fileté se présente sous la forme d'une vis de réglage dépassant d'un trou de passage dans chacun des carters (14a, 14b) et d'un membre porteur (15), et le deuxième membre fileté se présente sous la forme d'un écrou de réglage en contact avec l'extrémité en saillie de la vis de réglage opposée à la tête de vis.

7. Un dispositif d'articulation (13) selon n'importe laquelle des revendications précédentes, dans lequel le système de réglage comporte un moyen d'orientation permettant d'orienter de manière élastique les contre-surfaces intérieure (25) et extérieure (20) l'une vers l'autre afin de maintenir les contre-surfaces intérieure (25) et extérieure (20) en engagement contigu avec les surfaces porteuses respectives (21, 22).

8. Un dispositif d'articulation (13) selon n'importe laquelle des revendications précédentes, dans lequel se trouvent également plusieurs trous filetés (31) dans le montant central (16a) et un nombre correspondant d'alésages (29) dans le carter intérieur (14b), chacun devant être aligné sur le trou fileté correspondant (31) et une vis de blocage (32) est posée dans chaque trou (31) et alésage (29) pour fixer le carter intérieur (14b) au montant central (16a).

9. Un dispositif d'articulation (13) selon la revendication 8, dans lequel la ou chaque vis de blocage (32) possède une tête fraisée dans le carter intérieur (14b).

10. Un dispositif d'articulation (13) selon n'importe laquelle des revendications précédentes, dans lequel au moins un élément de fixation se trouve sur le carter extérieur (14a) pour permettre de monter le carter extérieur (14a) sur un premier élément et dans lequel au moins un élément de fixation est prévu sur le membre porteur sphérique (15) pour monter le membre porteur sphérique (15) sur un deuxième élément.

11. Un dispositif d'articulation (13) selon la revendication 10, dans lequel le premier élément est associé à un bogie de véhicule et le deuxième élément est associé à un wagon de véhicule.
